# EUROPÄISCHE PATENTSCHRIFT

(11) **EP 0 445 253 B1**
(45) Veröffentlichungstag und Bekanntmachung des Hinweises auf die Patenterteilung: **14.04.1993**
(21) Anmeldenummer: 90914052.7
(22) Anmeldetag: 26.09.1990
(51) Int. Cl.: F24D 13/02

(54) **FLÄCHENHEIZKÖRPER**
SURFACE HEATER
RADIATEUR PANNEAU

(30) Priorität: 26.09.1989 DE 3932101
(43) Veröffentlichungstag der Anmeldung: 11.09.1991
(73) Patentinhaber: Rupp, Johann, D-90765 Fürth (DE)
(72) Erfinder: Rupp, Johann, D-90765 Fürth (DE)
(74) Vertreter: Eder, Eugen, Dipl.-Ing.
(86) Internationale Anmeldenummer: DE9000727
(87) Internationale Veröffentlichungsnummer: WO9105209

(56) Entgegenhaltungen:
- CH-A- 567 702
- DE-A- 3 711 035
- DE-U- 8 612 161
- DE-U- 8 708 005

## Beschreibung

Die Erfindung betrifft einen Flächenheizkörper mit den Merkmalen des Patentanspruches 1.

Ein Flächenheizkörper ist aus der DE-A-37 11 035 bekannt. Auf der Rückseite einer Frontplatte aus Naturstein ist eine getrennte Trägerplatte für einen Heizkörper und eine sich hieran anschließende Strahlungsfolie vorgesehen. Dieser Flächenheizkörper ist über Abstandshalter in Form von an der Natursteinplatte befestigten Gewindebolzen an einer Wand oder dgl. befestigbar. Die den Heizkörper aus einem elektrischen Leiter aufweisende, eine Strahlungsfolie, eine Wärmedämmplatte und eine rückwärtige Strahlungsfolie integrierende, formsteife Trägerplatte wird mittels aufgeschraubten Muttern an die Rückseite der Natursteinplatte angepresst. Nachteilig ist, daß die Trägerplatte keine genügende Abschirmung einer hinter dem Heizkörper befindlichen, wärmeempfindlichen Wand gewährleistet. Der elektrische Heizleiter der Trägerplatte wird lediglich an die Rückseite der Natursteinplatte angepreßt. Eine optimale Wärmeübertragung auf die Natursteinplatte ist dadurch nicht gewährleistet.

Aus der CH-A-567 702 ist es bei Heizkörpern, z. B. Radiatoren oder Konvektoren, bekannt, an der zu schützenden Wand oder an der Rückseite eines solchen Heizkörpers einen Wärmestrahlungs-Schutzschirm vorzusehen. Dieser ist mit Abstand zur Rückseite des Heizkörpers befestigt und weist eine spiegelnde Oberfläche auf. Zwischen Wärmestrahlungs-Schutzschirm und Heizkörper besteht ein von den Seiten zugänglicher Luftraum. Ein solcher Wärmestrahlungs-Schutzschirm ist am Heizkörper über Haken und Abstandsrippen befestigbar. Der bekannte Heizkörper ist kein Flächenheizkörper mit einer Natursteinplatte, die die Wärme speichert. Es ist auch kein am Heizkörper befestigter, elektrischer Heizleiter erkennbar. Die Halterung des Wärmestrahlungsschirms am Heizkörper ist infolge der Verbindung durch Haken und Abstandsrippen nicht sicher. Sie ist zudem aufwendig.

Der Erfindung liegt die Aufgabe zugrunde, einen Flächenheizkörper mit einer Frontplatte aus Naturstein zu schaffen, der neben der Strahlungswärme auch Konvektionswärme abgibt, eine hinter dem Flächenheizkörper befindliche Wand vor Wärmeeinwirkung weitgehend schützt, einfach aufgebaut, einfach an einer Wand befestigbar und reparaturfreundlich ist.

Die Erfindung löst diese Aufgabe mit allen Merkmalen des Patentanspruches 1.

Gegenüber dem bekannten Flächenheizkörper mit Natursteinplatte nach der wird der Vorteil erreicht, daß der elektrische Heizkörper infolge des Aufklebens einen optimalen Wärmeübergang auf die Natursteinplatte gewährleistet. Für das Aufkleben ist eine ebene, geschliffene und polierte Rückseite der Natursteinplatte erforderlich. Die Anordnung einer an sich bekannten wärmereflektierenden, dünnen Strahlungsplatte schützt die hinter dem Flächenheizkörper befindliche wärmeempfindliche Wand. Die Befestigung mittels der bei einem solchen Flächenheizkörper mit Natursteinplatte vorhandenen Halteelemente in Form von Gewindebolzen und Muttern ist besonders einfach. Zudem wird die Strahlungsplatte sicher und ohne die Gefahr des Verlorengehens befestigt.

Weitere Ausgestaltungen der Erfindung ergeben sich aus den Unteransprüchen.

Die Erfindung wird nachfolgend anhand eines in der Zeichnung dargestellten Ausführungsbeispieles näher erläutert. In der Zeichnung zeigen:

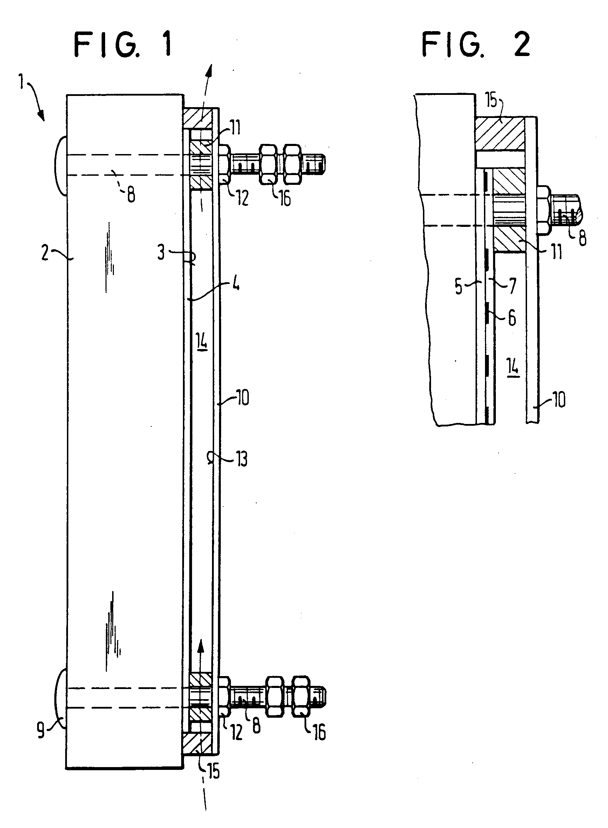

- Fig. 1: Eine schematische Seitenansicht eines Flächenheizkörpers und
- Fig. 2: eine vergrößerte Teilansicht.

Der Flächenheizkörper 1, zum Beispiel zur vertikalen Anbringung an Haltern einer Raumwand, weist eine Platte 2, vorzugsweise aus Naturstein auf. Diese Platte 2 kann zum Beispiel eine rechteckige Form aufweisen.

An der ebenen Rückseite 3 ist ein Heizkörper 4 vorgesehen. Der Heizkörper 4 deckt im wesentlichen die Rückseite 3 ab.

Der Heizkörper 4 kann aus einer hitzebeständigen Kunststoff-Folie 5 einem darauf aufgebrachten Heizleiter 6 und einer abdeckenden, hitzebeständigen Kunststoff-Folie 7 bestehen.

Vorzugsweise ist der Heizleiter 6 im Querschnitt flach ausgebildet. Er kann zum Beispiel auf die eine Kunststoff-Folie 5 aufgedruckt sein.

Die Kunststoff-Folien 5 und 7 sind miteinander verschweisst, verklebt oder auf andere Weise miteinander fest verbunden.

Die eine Kunststoff-Folie 5 ist mit der Rückseite 3 der Platte 2 durch Kleben verbunden. Hierzu ist die Rückseite 3 der Platte 2 geschliffen und poliert. Überraschenderweise hat sich gezeigt, daß erst dann ein bleibendes Verkleben der Kunststoff-Folie 5 mit der Platte 2 möglich ist. Als Klebstoffe können Epoxydharze, Zweikomponentenkleber oder dergleichen hitzebeständige Klebstoffe verwendet werden.

Anstatt Kunststoff-Folien 5, 7 können auch dünne Keramikplatten verwendet werden.

An mehreren Stellen der Platte 2 sind durchgehende Löcher für Haltebolzen 8 mit Gewinde vorgesehen. Vorzugsweise sind diese Haltebolzen 8 im Bereich der Ecken der Platte 2 angeordnet. Frontseitig besitzt jeder Haltebolzen 8 einen Kopf 9.

Im Abstand zum Heizkörper 4 ist eine dünne, wärmereflektierende Strahlungsplatte 10 angeordnet. Sie ist mittels den Haltebolzen 8, Abstandsscheiben 11 und Muttern 12 befestigt.

Die reflektierende Innenfläche 13 ist vorzugsweise spiegelnd ausgebildet. Hierdurch wird die vom Heizkörper 4 nach rückwärts abgestrahlte Wärme zum Heizkörper 4 und zur Platte 2 zurückgestrahlt.

Zwischen Heizkörper 4 und Strahlungsplatte 10 ist ein Luftraum 14 gebildet. Dieser ist zu den Seiten hin offen. Erwärmt sich die im Luftraum 14 befindliche Luft, so wird sie durch die auftretende Kaminwirkung in der angegebenen Pfeilrichtung nach oben abströmen und kühlere Luft strömt von unten zu. Hierdurch wird erreicht, daß die Strahlungsplatte 10 und damit die dahinter befindliche Raumwand vor übergroßen Hitzeeinwirkungen verschont bleibt, die zur Zerstörung des Putzes der Raumwand führen könnte.

Als Strahlungsplatte 10 kann auch eine Strahlungsfolie, z.B. eine Aluminiumfolie oder dergl., verwendet werden. Wesentlich ist, daß die Innenfläche 13 dieser Strahlungsfolie wärmereflektierend wirkt.

Damit die Strahlungsplatte 10 auch am Außenrand gehalten ist, können im bestand angeordnete Abstandshalteteile 15 mit der Rückseite 3 der Platte 2 und der Innenfläche 13 der Strahlungsplatte 10 verbunden sein.

Auf den Haltebolzen 8 befinden sich noch weitere Muttern 16, die zur Befestigung des Flächenheizkörpers 1 an Halteteilen an der Raumwand oder dergl. dienen.

## Patentansprüche

1. Flächenheizkörper
mit
einer Frontplatte (2) aus Naturstein mit ebener, geschliffener und polierter Rückseite (3), einem daran anliegenden, mittels hitzebeständigem Kleber aufgeklebten elektrischen Heizkörper (4), der zwischen abdeckenden dünnen Keramikplatten oder hitzebeständigen Kunststoffolien den Heizleiter aufweist,
einer wärmereflektierenden,dünnen Strahlungsplatte (10) mit spiegelnder, der Frontplatte zugekehrter Innenfläche (13),
mehreren, an der Frontplatte befestigten Haltebolzen (8), an denen über Abstandsscheiben (11) und Muttern (12) die Strahlungsplatte mit Abstand zum Heizkörper, einen nach außen hin offenen Luftraum bildend befestigt ist.

2. Heizkörper nach Anspruch 1,
dadurch gekennzeichnet,
daß der Rand der Strahlungsplatte (10) mittels Abstandshalter (15) an der Rückseite (3) der Frontplatte (2) abgestützt ist.

3. Heizkörper nach Anspruch 1,
dadurch gekennzeichnet,
daß die Strahlungsplatte (10) von einer Strahlungsfolie gebildet ist.

4. Heizkörper nach Anspruch 1,
dadurch gekennzeichnet,
daß die Haltebolzen (8) für die Frontplatte (2) von die Frontplatte durchsetzenden Gewindebolzen (8) gebildet sind.

## Claims

1. Panel radiator having a front plate (2) made of natural stone with a flat, ground and polished reverse side (3), an electrical radiator (4) in surface contact therewith, which is adhesively bonded with heat-resistant adhesive and has the heating conductor between covering thin ceramic plates or heat-resistant plastics films, a heat-reflecting, thin radiation plate (10) with reflective inner surface (13) directed towards the front plate, a plurality of retaining bolts (8) fastened on the front plate, on which the radiation plate is fastened via spacer discs (11) and nuts (12) at a distance from the radiator so as to form an outwardly open air space.

2. Radiator according to Claim 1, characterised in that the edge of the radiation plate (10) is supported by means of spacers (15) on the reverse side (3) of the front plate (2).

3. Radiator according to Claim 1, characterised in that the radiation plate (10) is formed by a radiation film.

4. Radiator according to Claim 1, characterised in that the retaining bolts (8) for the front plate (2) are formed by threaded bolts (8) penetrating the front plate.

## Revendications

1. Corps de chauffe de forme plate, comprenant une plaque frontale (2) en pierre naturelle possédant une face arrière (3) plane, meulée et polie, un corps de chauffe électrique (4), appliqué contre cette plaque, collé au moyen d'une colle résistante à la chaleur et qui présente le conducteur chauffant entre des plaques céramiques minces recouvrantes ou des feuilles de matière plastique résistantes à la chaleur, une plaque radiante (10) réfléchissant la chaleur et possédant une surface interne (13) formant miroir, dirigée vers la plaque avant, plusieurs vis de fixation (8) fixées à la plaque frontale, auxquelles la plaque radiante est fixée à l'aide de rondelles entretoises (11) et d'écrous (2), à distance du corps de chauffe, en formant un espace d'air ouvert sur l'extérieur.

2. Corps de chauffe selon la revendication 1, caractérisé en ce que le bord de la plaque radiante (10) prend appui sur la face arrière (3) de la plaque avant (2) au moyen d'entretoises.

3. Corps de chauffe selon la revendication 1, caractérisé en ce que la plaque radiante (10) est constituée par une feuille radiante.

4. Corps de chauffe selon la revendication 1, caractérisé en ce que les vis de fixation (8) servant à fixer la plaque avant (2) sont constituées par des tiges filetées (8) qui traversent la plaque avant.
